# FASCICULE DE BREVET EUROPEEN

(11) **EP 2 235 614 B1**
(45) Date de publication et mention de la délivrance du brevet: **22.08.2012**
(21) Numéro de dépôt: 08872788.8
(22) Date de dépôt: 19.12.2008
(51) Int. Cl.: G06F 3/047, G06F 3/044, G06F 3/045

(54) **CIRCUIT ELECTRONIQUE D'ANALYSE A ALTERNANCE DE MESURE CAPACITIVE/ RESISTIVE POUR CAPTEUR TACTILE MULTICONTACTS A MATRICE PASSIVE**
ELEKTRONISCHE ANALYSESCHALTUNG MIT WECHSELNDER KAPAZITIVER/RESISTIVER MESSUNG FÜR TAKTILEN MEHRKONTAKT-PASSIVMATRIXSENSOR
ELECTRONIC ANALYSIS CIRCUIT WITH ALTERNATION OF CAPACITIVE/RESISTIVE MEASUREMENT FOR PASSIVE-MATRIX MULTICONTACT TACTILE SENSOR

(30) Priorité: 19.12.2007 FR 0760015
(43) Date de publication de la demande: 06.10.2010
(73) Titulaire: Stantum, 33000 Bordeaux (FR)
(72) Inventeur: JOGUET, Pascal, F-33670 Sadirac (FR); LARGILLIER, Guillaume, F-33100 Bordeaux (FR); OLIVIER, Julien, F-33800 Bordeaux (FR)
(74) Mandataire: Stankoff, Hélène
(86) Numéro de dépôt international: PCT/FR2008/001805
(87) Numéro de publication internationale: WO 2009/106736

(56) Documents cités:
- EP-A- 0 250 931
- EP-A1- 2 026 179
- WO-A-96/26499
- GB-A- 2 288 665
- US-A- 5 365 461

## Description

La présente invention concerne un circuit électronique d'analyse à alternance de mesure capacitive/résistive pour capteur tactile multicontacts à matrice passive.

La présente invention concerne le domaine des capteurs tactiles multicontacts à matrice passive.

Ce type de capteur est muni de moyens d'acquisition simultanée de la position, la pression, la taille, la forme et le déplacement de plusieurs doigts sur sa surface, afin de commander un équipement, de préférence par l'intermédiaire d'une interface graphique.

Lesdits capteurs peuvent être utilisés, de manière non limitative, en tant qu'interfaces pour des ordinateurs personnels, portables ou non, des téléphones cellulaires, des guichets automatiques (banques, points de ventes, billetterie), des consoles de jeu, des lecteurs multimédia portatifs (baladeurs numériques), du contrôle d'équipements audiovisuels ou électroménagers, du contrôle d'équipements industriels, des navigateurs GPS.

On connaît dans l'état de la technique des capteurs tactiles transparente multicontacts. Un tel capteur est constitué par une surface d'interaction tactile présentant deux réseaux non parallèles. Chaque réseau est constitué par un ensemble de pistes généralement parallèles. Ces réseaux définissent entre eux des noeuds situés à la projection de l'intersection d'un réseau sur l'autre. A ces noeuds sont prévus des moyens de mesure physique délivrant une information fonction de la présence sur la zone de contact correspondante.

Ces capteurs permettent de connaître l'état de plusieurs zones de contact simultanément. La mesure effectuée sur chaque noeud correspond à une mesure de tension ou de capacité aux bornes des deux éléments de réseaux associés au noeud considéré. On procède au balayage de chaque réseau de manière séquentielle et rapide afin de recréer une image du capteur plusieurs fois par seconde.

Afin d'assurer un temps de réponse convenable, il est impératif de pouvoir mesurer l'activité d'un doigt avec une latence maximale de 20 millisecondes.

On a proposé dans l'état de la technique une solution décrite dans le brevet FR 2,866,726 visant un dispositif de contrôle par manipulation d'objets graphiques virtuels sur un afficheur tactile multicontacts.

Ledit dispositif comprend en outre un circuit électronique d'analyse permettant d'acquérir et d'analyser les données du capteur avec une fréquence d'échantillonnage de 100 Hertz. Le capteur peut être divisé en plusieurs zones afin d'effectuer un traitement parallèle sur lesdites zones. Il comporte une matrice de pistes conductrices, ladite matrice comportant des moyens d'alimentation sur l'un des deux axes, et des moyens de détection des caractéristiques électriques sur l'autre axe, aux intersections entre les deux axes.

La caractéristique électrique effectivement mesurée peut être la résistance ou la capacité. On parlera alors respectivement de capteur résistif ou capacitif.

On connaît des dispositifs de détection décrits dans les documents US 5 365 461 et EP 0 250 931 qui permettant de détecter à la fois le contact d'un doigt et le contact d'un stylet sur le capteur.

Le choix d'une caractéristique électrique parmi la résistance et la capacité engendre des inconvénients rendant la solution retenue inadaptée pour diverses applications. Plus particulièrement, la mesure de la capacité restreint le contact aux doigts - ou autre objet spécifique aux capteurs capacitifs - tout en offrant une meilleure sensibilité au contact, la présence d'un doigt pouvant être mesurée avant que ce dernier n'est touché physiquement le capteur, La mesure de la résistance présente une sensibilité inférieure, mais s'adresse à tout type d'objet de contact, doigt, stylet, ou tout objet rentrant en contact avec la surface du capteur.

Le choix de l'une ou de l'autre de ces deux caractéristiques électriques rend impossible l'obtention d'un capteur tactile multipoints à matrice passive présentant une sensibilité suffisante ainsi qu'un panel d'éléments de contact à disposition.

Le but de la présente invention est de remédier à cet inconvénient, en proposant un circuit électronique d'analyse pour capteur tactile transparent multicontacts à matrice passive, ce circuit électronique d'analyse étant apte à la réalisation de mesures de capacité et de résistance. Un capteur tactile multipoints comportant un tel circuit électronique d'analyse peut fournir une information optimale et complète en toutes circonstances.

Dans ce but, la présente invention propose un circuit électronique d'analyse pour capteur tactile multicontacts à matrice passive comportant des moyens d'alimentation électriques de l'un des deux axes de la matrice, et des moyens de détection des caractéristiques électrique selon l'autre axe de la matrice, aux intersections entre les deux axes, caractérisé en ce que la caractéristique électrique mesurée est la capacité à chaque phase de balayage du capteur, et en ce que lorsqu'un contact est détecté sur une zone de contact (83, 84, 85) à l'intérieur d'un objet graphique (91,92), la caractéristique électrique mesurée est en outre la résistance, ladite mesure additionnelle de résistance étant opérée sur ledit objet graphique dans son ensemble afin de déterminer la force exercée par ledit contact sur ledit objet graphique.

Un capteur tactile multipoints comportant un tel circuit électronique d'analyse intègre les avantages de la mesure capacitive, c'est-à-dire une sensibilité élevée permettant de détecter l'approche du doigt sans nécessairement de contact physique avec le capteur, ce qui fournit un contact anticipé, donc plus subtile. Ce capteur intègre également les avantages de la mesure résistive, soit la fiabilité du signal mesuré avec n'importe quel outil de contact.

Cela permet par exemple de valider ou d'invalider si un contact est intentionnel ou pas. En effet, il est possible grâce à cette technique de différencier un effleurement d'un appui.

Selon d'autres modes particuliers de fonctionnement :
- une alternance de la caractéristique électrique mesurée est conditionnée par la détection d'au moins un artefact,
- la caractéristique électrique mesurée est la résistance dans le cas d'une détection d'au moins un artefact.

Un capteur tactile multipoints comportant un tel circuit électronique d'analyse présente l'avantage d'éviter tout problème d'apparition d'artefact pouvant survenir régulièrement. Dans un tel cas, la mesure opérée est la mesure résistive, qui offre une plus grande fiabilité de l'information mesurée par rapport à la mesure résistive. Ce capteur est ainsi apte à s'adapter en fonction du contexte pour fournir la meilleure information tactile possible.

selon un autre mode particulier de fonctionnement, l'alternance de la caractéristique électrique mesurée est conditionnée par la réception d'un signal de commande.

Un capteur tactile multipoints comportant un tel circuit électronique d'analyse permet de bénéficier d'une adaptation par exemple au type d'outil de contact de l'utilisateur. En effet, dans le cas d'une mesure avec un outil de contact autre qu'un doigt (par exemple un stylet), la mesure résistive sera préférée. Dans le cas d'une mesure avec un doigt, la mesure capacitive fournira l'information optimale.

Ainsi lorsque l'utilisateur se sert par exemple d'un stylet, il peut activer un signal de commande délivrant une information en direction du capteur tactile multipoints afin que ce dernier fonctionne selon un mode de mesure résistive. S'il utilise en revanche un doigt, aucun signal ne sera délivré et le capteur tactile multipoints fonctionnera selon un mode de mesure résistive.

Selon un autre mode particulier de fonctionnement, la caractéristique électrique mesurée est la résistance à chaque phase de balayage du capteur. Lorsqu'un contact est détecté sur une zone de contacts, une mesure additionnelle de capacité est opérée sur cette zone dans son ensemble afin de déterminer la nature de ce Contact. Ainsi, il est possible d'identifier si le contact provient d'un doigt (ou de toute autre partie de la main) ou bien d'un autre objet (par exemple un stylent). En effet, si il s'agit d'un doigt ou d'une autre partie de la main, la capacité mesurée sera différente de la capacité de référence du capteur. Si au contraire, il s'agit d'un stylet, la capacité mesurée sera inchangée. Ainsi, selon ce monde de fonctionnement, il est possible d'associer à chaque nouveau curseur un identifiant spécifique en fonction du type de contact (cf. figure). Cette technique permet notamment d'associer des lois de traitement spécifiques aux objets graphiques en fonction de du moyen de contact.

Selon un autre mode particulier de fonctionnement pour lequel le moyen de contact est un doigt, la caractéristique électrique mesurée est la résistance à chaque phase de balayage du capteur. Lorsqu'un contact est détecté sur une zone de contact lors d'une phase de balayage et ne l'est plus lors d'une phase de balayage ultérieure, une mesure additionnelle de capacité est opérée sur cette zone dans son ensemble afin de déterminer l'éventuelle proximité ultérieure de ce doigt.

La présente invention concerne également un capteur tactile à matrice passive multicontacts comportant des moyens d'alimentation électriques de l'un des deux axes de la matrice, et des moyens de détection de caractéristiques électriques selon l'autre axe de la matrice, aux intersections entre les deux axes, ledit capteur tactile comportant également un circuit électronique d'analyse conforme à l'invention.

Le capteur peut présenter trois modes de fonctionnement présentant chacun des avantages différente : un mode périodique, un mode conditionné par la détection d'artefact et un mode conditionné par la réception d'un signal de commande.

Ces trois modes peuvent être combinés de façon à profiter des avantages de chaque mode. Dans chaque cas, des priorités sont instaurées entre les modes. Plus particulièrement, le mode conditionné par la réception d'un signal de commande peut être prioritaire sur le mode conditionné par la détection d'artefact, lui-même pouvant être prioritaire sur le mode périodique.

L'invention sera mieux comprise à la lecture de la description détaillée d'un exemple non limitatif de réalisation, accompagné de figures annexées représentant respectivement :
- la figure 1, une vue d'un afficheur tactile multicontacts à matrice passive,
- la figure 2, un diagramme d'un procédé d'acquisition des données sur l'ensemble du capteur tactile, mis en oeuvre par un circuit électronique selon la présente invention,
- la figure 3, un diagramme d'un procédé d'analyse des données, mis en oeuvre par un circuit électronique selon la présente invention,
- la figure 4, un diagramme d'un procédé d'acquisition et d'analyse mis en oeuvre par un circuit électronique selon un premier exemple de fonctionnement, ce procédé comportant une alternance capacitif/résistif périodique,
- la figure 5, un diagramme d'un procédé d' acquisition et d'analyse mis en oeuvre par un circuit électronique selon un deuxième exemple de fonctionnement, ce procédé comportant une alternance capacitif/résistif conditionnée par la détection éventuelle d'un artefact,
- la figure 6, un diagramme d'un procédé d'acquisition et d'analyse mie en oeuvre par un circuit électronique selon un troisième exemple de fonctionnement, ce procédé comportant une alternance capacitif/résistif conditionnée par la réception d'un signal de commande,
- la figure 7, un schéma d'un procédé d'acquisition et d'analyse mis en oeuvre par un circuit électronique selon un quatrième exemple de fonctionnement,
- la figure 8, un chronogramme relatif à la détection d'un contact selon le procédé conforme au quatrième exemple de fonctionnement,
- les figures 9A à 9D, des schémas d'un écran tactile lors de contacts durant le procédé conforme au quatrième exemple de fonctionnement,
- la figure 10, un schéma d'un procédé d'acquisition et d'analyse mis en oeuvre par un circuit électronique conforme à un mode de réalisation de la présente invention,
- la figure 11, un chronogramme relatif à la détection d'un contact selon le procédé conforme au mode de réalisation de la figure 10, et
- les figures 12A à 12D, des schémas d'un écran tactile lors de contacts durant le procédé conforme au mode de réalisation de la figure 10.

Un circuit d'analyse électronique conforme à l'invention vise à s'intégrer dans un capteur tactile multicontacts à matrice passive.

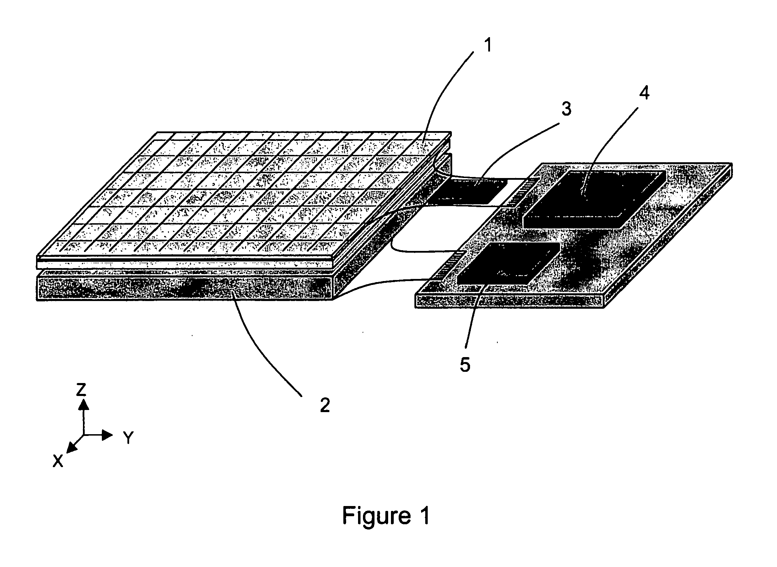

La figure 1 représente une vue d'un dispositif électronique tactile comprenant :
- un capteur tactile matriciel 1,
- un écran de visualisation 2,
- une interface de capture 3,
- un processeur principal 4, et
- un processeur graphique 5.

Le premier élément fondamental dudit dispositif tactile est le capteur tactile 1, nécessaire à l'acquisition - la manipulation multicontacts - à l'aide d'une interface de capture 3. Cette interface de capture 3 contient les circuits électroniques d'acquisition et d'analyse.

Ledit capteur tactile 1 est de type matriciel. Ledit capteur peut être éventuellement divisé en plusieurs parties afin d'accélérer la captation, chaque partie étant scannée simultanément.

Les données issues de l'interface de capture 3 sont transmises après filtrage, au processeur principal 4. Celui-ci exécute le programme local permettant d'associer les données de la dalle à des objets graphiques qui sont affichés sur l'écran 2 afin d'être manipulées.

Le processeur principal 4 transmet également à l'interface graphique les données à afficher sur l'écran de visualisation 2. Cette interface graphique peut en outre être pilotée par un processeur graphique 5.

Le capteur tactile est commandé de la façon suivante : on alimente successivement, lors d'une première phase de balayage, les pistes d'un des réseaux et on détecte la réponse sur chacune des pistes du second réseau. On détermine en fonction de ces réponses des zones de contact qui correspondent aux noeuds dont l'état est modifié par rapport à l'état au repos. On détermine un ou plusieurs ensembles de noeuds adjacents dont l'état est modifié. Un ensemble de tels noeuds adjacents définit une zone de contact. On calcule à partir de cet ensemble de noeud une information de position qualifié au sens du présent brevet de curseur. Dans le cas de plusieurs ensembles de noeuds séparés par des zones non actives, on déterminera plusieurs curseurs indépendants pendant une même phase de balayage.

Cette information est rafraîchie périodiquement au cours de nouvelles phases de balayage.

Les curseurs sont créés, suivis ou détruits en fonction des informations obtenues au cours des balayages successifs. Le curseur est à titre d'exemple calculé par une fonction barycentre de la zone de contact.

Le principe général est de créer autant de curseurs qu'il y a de zones détectées sur le capteur tactile et de suivre leur évolution dans le temps. Lorsque l'utilisateur retire ses doigts du capteur, les curseurs associés sont détruits. De cette manière, il est possible de capter la position et l'évolution de plusieurs doigts sur le capteur tactile simultanément.

La caractéristique électrique effectivement mesurée peut être la résistance ou la capacité.

Le processeur principal 4 exécute le programme permettant d'associer les données du capteur à des objets graphiques qui sont affichés sur l'écran de visualisation 2 afin d'être manipulées.

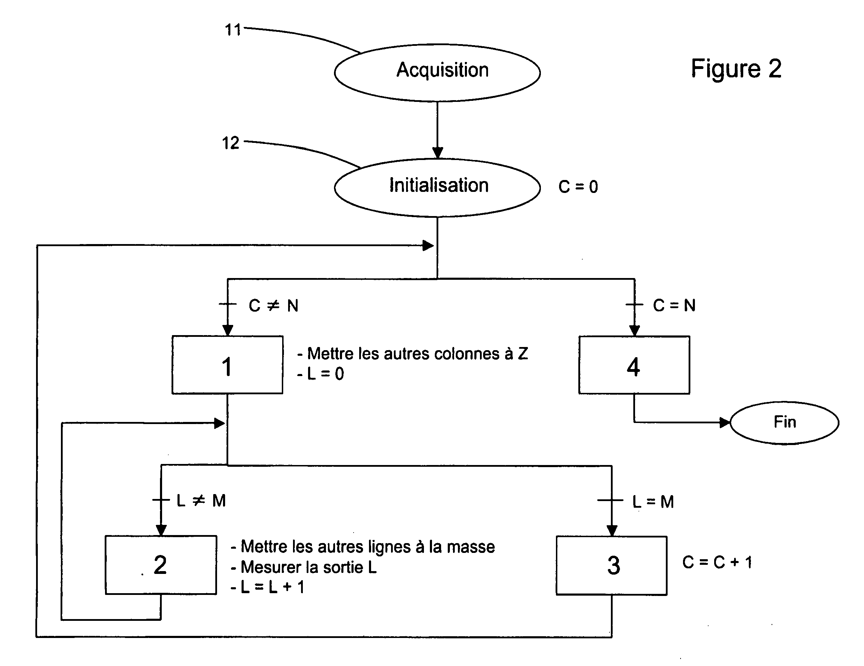

La figure 2 représente un diagramme du procédé 11 d'acquisition des données sur l'ensemble du capteur tactile, mis en oeuvre par le circuit électronique, avec les colonnes comme axe d'alimentation et les lignes comme axe de détection. Le capteur comprend M lignes et N colonnes.

Ce procédé a pour fonction de déterminer l'état de chaque noeud du capteur matriciel 1, à savoir si ledit noeud est activé ou pas.

Ledit procédé correspond à la mesure de tous les noeuds d'une matrice "tension". Ladite matrice est une matrice [M, N] contenant à chaque point (I, J) la valeur de la tension mesurée aux bornes du point d'intersection de la ligne I et de la colonne J, avec 1≤I≤M et 1≤J≤N. Cette matrice permet de donner l'état de chacun des points du capteur matriciel 1 à un instant donné.

Le procédé d'acquisition 11 commence par une étape d'initialisation 12 des données obtenues lors d'une acquisition précédente.

L'axe des colonnes constitue l'axe d'alimentation et l'axe des lignes constitue l'axe de détection. Selon un autre mode de réalisation de l'invention, l'axe des lignes constitue l'axe d'alimentation et l'axe des colonnes constitue l'axe de détection.

Le procédé 11 balaye d'abord la première colonne. Elle est alimentée par exemple en 5 Volts. Pour ladite colonne, le circuit électronique mesure une caractéristique électrique au point d'intersection entre ladite colonne et chacune des lignes de 1 à M.

Lorsque la mesure a été effectuée auprès de la M-ième ligne, le procédé passe à la colonne suivante et recommence les mesures de caractéristiques électriques à l'intersection de la nouvelle colonne considérée et de chacune des lignes de 1 à M.

Lorsque toutes les colonnes ont été balayées, les caractéristiques électriques de chacun des points du capteur matriciel 1 ont été mesurées. Alors le procédé est terminé, et le circuit électronique peut procéder à l'analyse de la matrice "tension" obtenue.

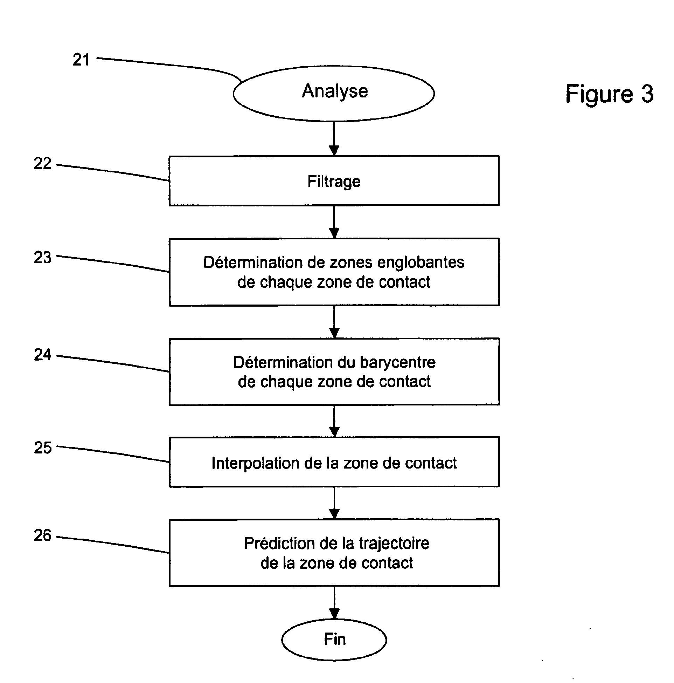

La figure 3 représente un diagramme du procédé d'analyse 21 des données mis en oeuvre par le circuit électronique.

Ledit procédé 21 est constitué d'une série d'algorithmes réalisant les étapes suivantes :
- un ou plusieurs filtrages 22,
- la détermination 23 des zones englobantes de chaque zone de contact,
- la détermination 24 du barycentre de chaque zone de contact,
- l'interpolation 25 de la zone de contact,
- la prédiction 26 de la trajectoire de la zone de contact.

Une fois terminé le procédé d'analyse 21, le logiciel est apte à appliquer aux objets graphiques virtuels du dispositif électronique tactile les différents traitements spécifiques afin de rafraîchir ledit dispositif électronique tactile en temps réel. Des zones englobant les zones de contacts, détectées lors de l'étape d'acquisition 11 des données, sont également définies.

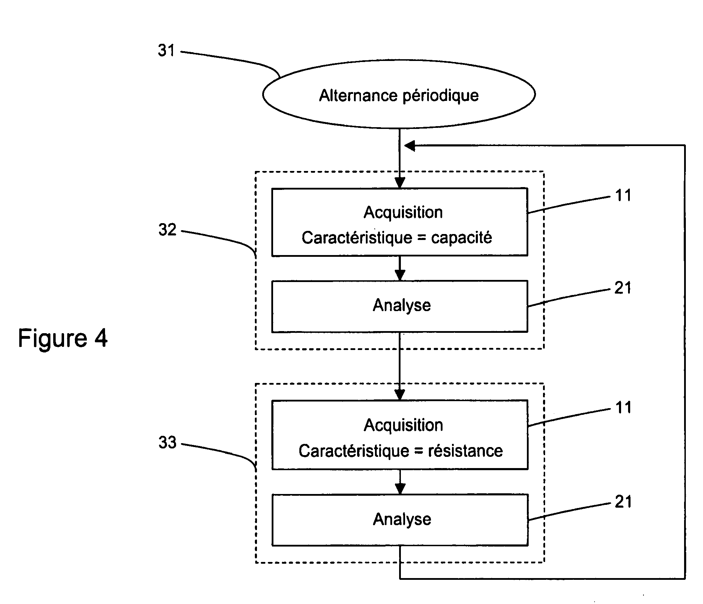

La figure 4 représente un diagramme d'un procédé 31 d'acquisition et d'analyse mis en oeuvre par un circuit électronique selon un premier exemple de fonctionnement. Ledit procédé 31 est un procédé d'alternance de mesure capacitive/résistive, ladite alternance étant périodique.

Selon ce mode de fonctionnement, le circuit électronique exécute l'étape 32 correspondant à la succession des étapes d'acquisition Il et d'analyse 21 avec la capacité comme caractéristique électrique mesurée.

Consécutivement à l'étape 32, une nouvelle étape 33 est effectuée, cette étape 33 correspondant à la succession d'étapes d'acquisition 11 et d'analyse 21 avec cette fois-ci la résistance comme caractéristique électrique mesurée.

Le procédé 31 réalise une boucle comprenant la succession des étapes 32 et 33. Celle-ci permet ainsi d'alterner les mesures de caractéristiques électriques choisies parmi la capacité et la résistance.

Dans une autre variante de ce mode de réalisation, le procédé réalise K fois la première étape 32, puis L fois la deuxième étape 33, K et L étant des entiers dont au moins un est strictement supérieur à 1.

A titre d'exemple, la fréquence de rafraîchissement est de l'ordre de 100Hz.

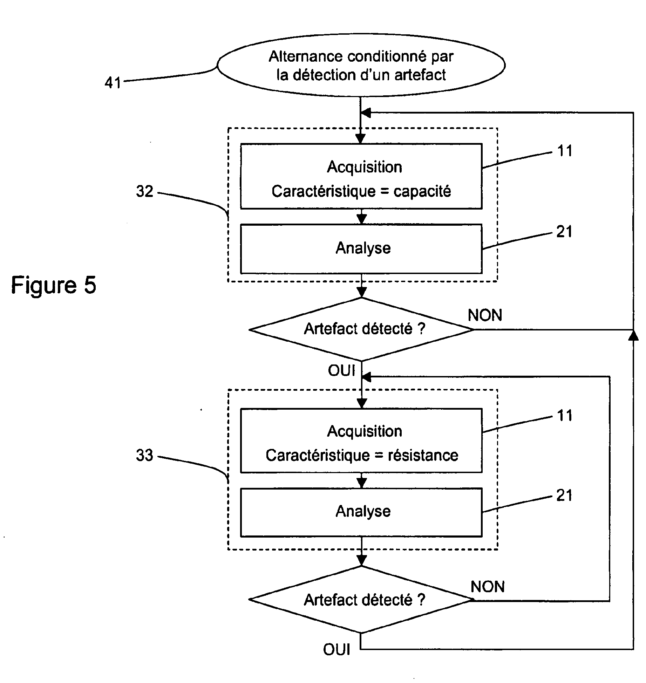

La figure 5 représente un diagramme d'un procédé 41 d'acquisition et d'analyse mis en oeuvre par un circuit électronique selon un deuxième exemple de fonctionnement. Ledit procédé 41 est un procédé d'alternance de mesure capacitive/résistive, ladite alternance étant conditionnée par la détection éventuelle d'un artefact.

Selon ce mode de fonctionnement, le procédé 41 réalise les étapes 32 et 33.

Le passage de l'une à l'autre des étapes 32 et 33 est Conditionné par la détection éventuelle d'un artefact résultant de chacune des étapes d'analyse 21 réalisées dans les étapes 32 et 33.

À chaque fin d'étape 21, mise en oeuvre lors de l'étape 32 ou 33, le circuit électronique détermine si un phénomène parasitaire de type artefact est présent sur au moins une partie du capteur matriciel l dont les données d'état de chacun des noeuds ont été acquises et analysées. Si aucun artefact n'est détecté en sortie de l'étape 32 ou 33, alors le procédé reboucle sur la même étape. Si un artefact a été détecté, alors le procédé alterne l'étape.

Par exemple, si un artefact n'est pas détecté en sortie de l'étape 32, le procédé reboucle sur ladite étape 32, mais si un artefact est effectivement détecté, le procédé alterne sur l'étape 33.

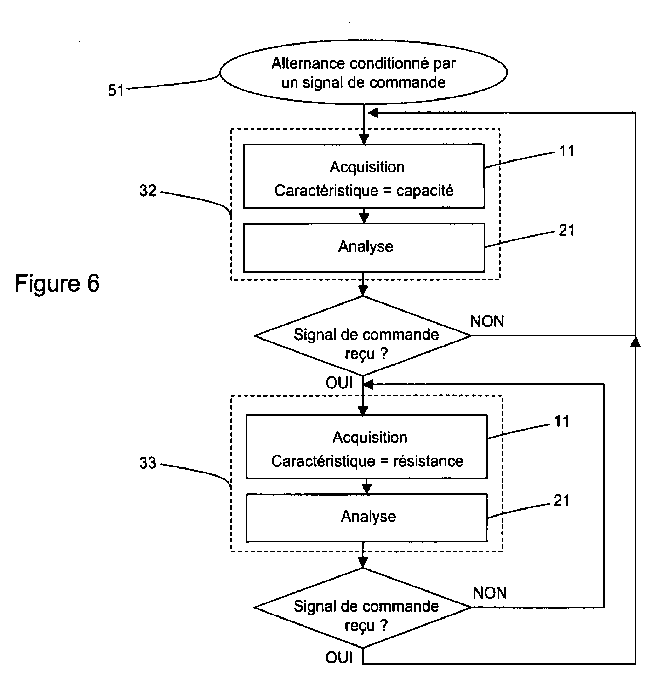

La figure 6 représente un diagramme d'un procédé 51 d'acquisition et d'analyse mis en oeuvre par un circuit électronique selon un troisième exemple de fonctionnement. Ledit procédé 51 est un procédé d'alternance de mesure capacitive/résistive, ladite alternance étant conditionnée par un signal de commande.

Selon ce mode de fonctionnement, le procédé réalise les étapes 32 et 33.

Le passage de l'une à l'autre des étapes 32 et 33 est conditionné par un signal de commande.

À chaque fin d'étape 21, mise en oeuvre lors de l'étape 32 ou 33, le circuit électronique détermine s'il a reçu un signal de commande entre ladite étape et la précédente. Si aucun signal de commande n'a été reçu, alors le procédé reboucle sur la même étape. Si un signal de commande a été reçu, alors le procédé alterne l'étape.

Par exemple, si un signal de commande a été reçu en sortie de l'étape 32, le procédé reboucle sur ladite étape 32, mais si un signal de commande a été effectivement reçu, le procédé alterne sur l'étape 33.

Un tel signal de commande peut par exemple être opéré par l'utilisateur du dispositif électronique tactile multipoints. En effet, cet utilisateur ne peut utiliser la mesure capacitive que dans le cas où son outil de contact est un doigt. Dans le cas contraire, il est contraint d'utiliser une mesure résistive. Ainsi lorsque l'utilisateur se sert par exemple d'un stylet, il peut activer un signal de commande délivrant une information en direction du capteur tactile multipoints 1 afin que ce dernier fonctionne selon un mode de mesure résistive.

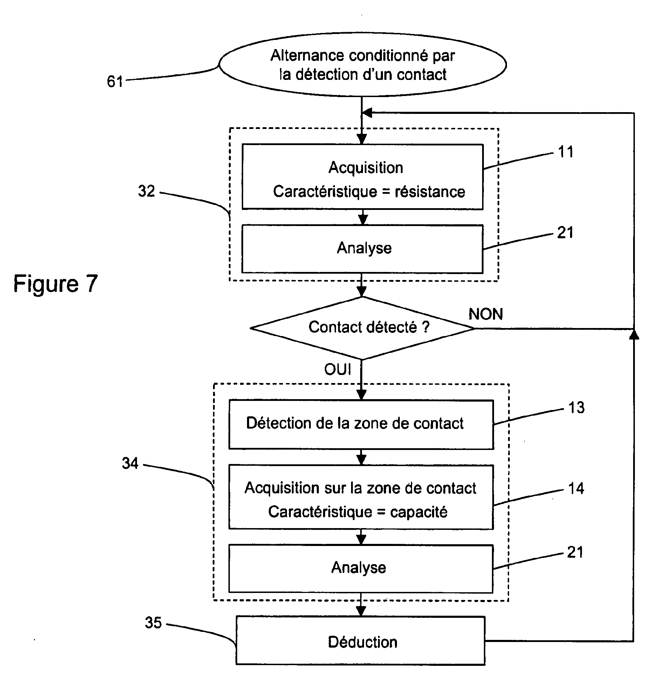

Selon un quatrième exemple de fonctionnement illustré par les figures 7 à 9, la caractéristique mesurée à chaque phase de balayage est la résistance, point par point sur l'ensemble du capteur (étape 32). On obtient alors une information sur l'existence d'un contact éventuel. Si un contact est détecté en au moins un point, la caractéristiques mesurée devient la capacité pour une seule mesures, sur un bloc de points compris dans le capteur (étape 34). Ce bloc correspond au curseur créé suite à la détection (étape 13) du contact en mode résistif. Cette mesure capacitive (étape 14) sur ce curseur - ou zone de contact - fournit alors, après analyse (étape 21) et déduction (étape 35), une information sur la nature du contact, à savoir si le moyen de contacts est un doigt (détecté par une mesure capacitive) ou un stylet (non détecté par une mesure capacitive).

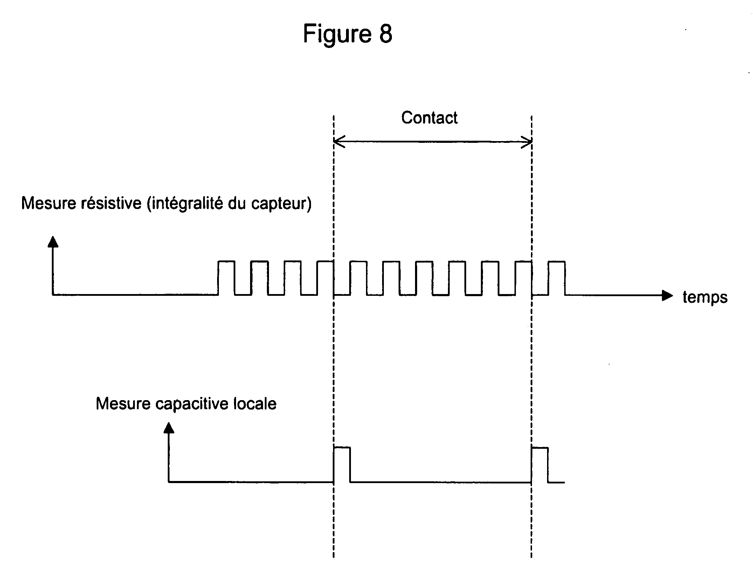

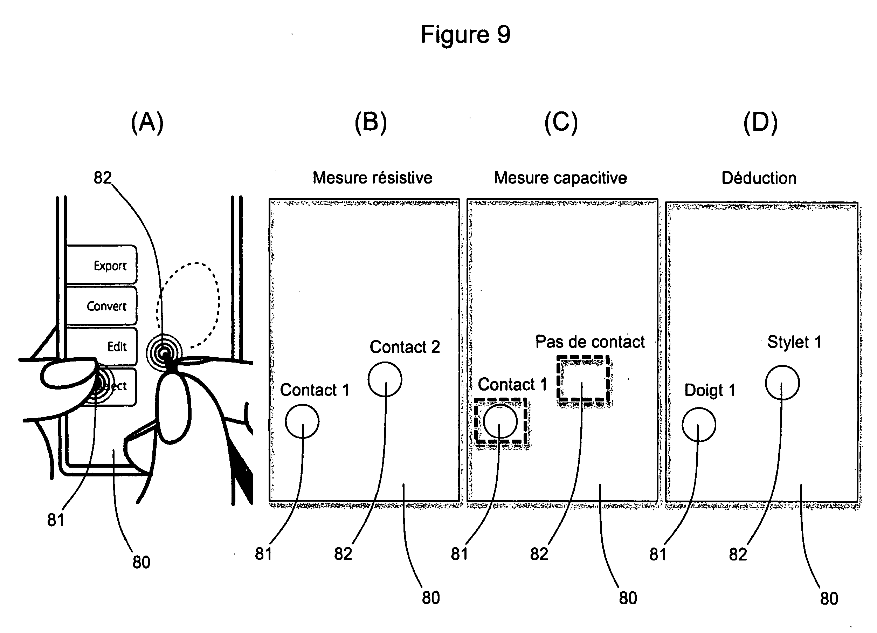

En référence aux figures 9A et 9B, un premier contact 81 avec un doigt et un deuxième 82 contact avec un stylet sont détectés sur l'écran tactile 80 lors d'une mesure résistive. Comme le montrent la figure 9C et le chronogramme de la figure 8, il est alors procédé à une mesure capacitive sur ces deux zones de contact 81 et 82. Cette mesure permet la détection d'un contact dans la zone du premier contact 81 (doigt) et n'obtient aucune détection sur la zone du deuxième contact 82 (stylet), Comme illustré sur la figure 9D, on peut ainsi discriminer les deux types de contacts, c'est-à-dire un doigt 1 pour le premier contact 81 et un stylet 1 pour le deuxième contact 82.

Cette mesure capacitive s'effectue une seule fois sur ce curseur créé (figure 8), la nature du contact constitué par ce curseur ne pouvant a priori pas changer tant qu'il est maintenu, et il est procédé en parallèle à des phases de balayage en mode résistif.

Cette variante du circuit électronique d'analyse permet de déterminer la nature du contact afin d'en tenir compte, par exemple pour adapter la précision de la mesure résistive suivante - la résolution devant être supérieure pour un stylet - ou de rejeter un contact si sa nature n'est pas celle que le capteur tactile ou une partie de celui-ci est susceptible de tolérer.

Suivant une variante analogue à ce quatrième exemple, dans le cas du contact par un doigt, pendant qu'un contact est détecté, les mesures sont effectuées en mode résistif sur l'ensemble du capteur, point par point, à chaque phase de balayage. Si une relâche du curseur correspondant à ce contact est détectée, il est procédé à une mesure capacitive sur la zone du curseur en un bloc. Cette mesure permet de déterminer si le doigt est toujours à proximité de la zone de contact relâchée, ce qui est le signe d'un relâchement inopiné du doigt pendant un contact prolongé (par exemple lors de la manipulation d'un objet graphique correspondant à une fenêtre déroulante).

Cette variante du circuit électronique d'analyse permet ainsi de ne pas perdre un curseur défini par un doigt lorsque cette perte du curseur n'est pas été intentionnelle.

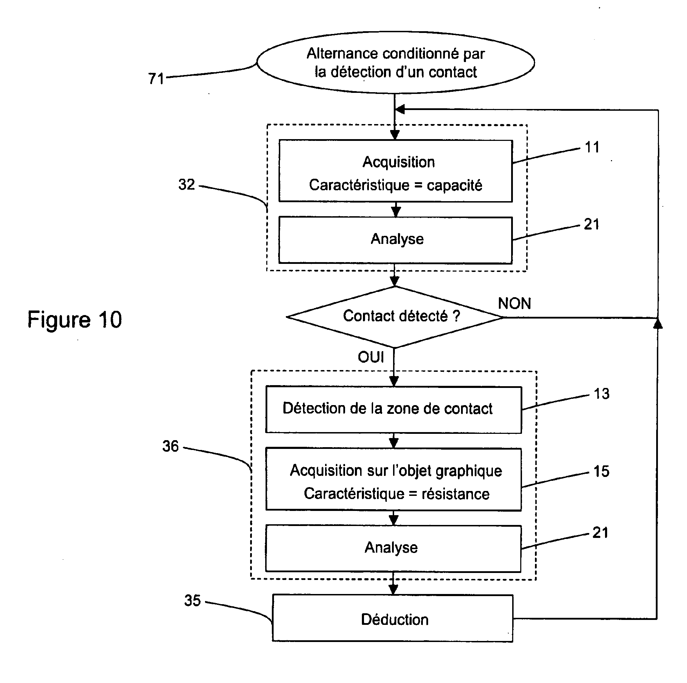

Selon un mode de réalisation illustré par les figures 10 à 12, il est procédé à une sécurisation d'un objet graphique. Pour cela, une mesure capacitive est opérée sur un objet graphique à sécuriser, point par point, à chaque phase de balayage (étape 32). Si un contact est détecté suivant ce mode capacitif, il est procédé à une détection de la zone de contact (étape 13), puis à une mesure en mode résistif (étape 15) sur l'ensemble de l'objet graphique, ce qui permet d'obtenir après analyse (étape 21) une information sur la force exercée par le contact détectée. Il est ensuite procédé à la déduction suivante (étape 35) : si cette force ne dépasse pas une valeur seuil, le contact est insuffisant et n'est alors pas considéré comme un contact donnant lieu à la création d'un curseur. Sinon, le curseur est bien créé.

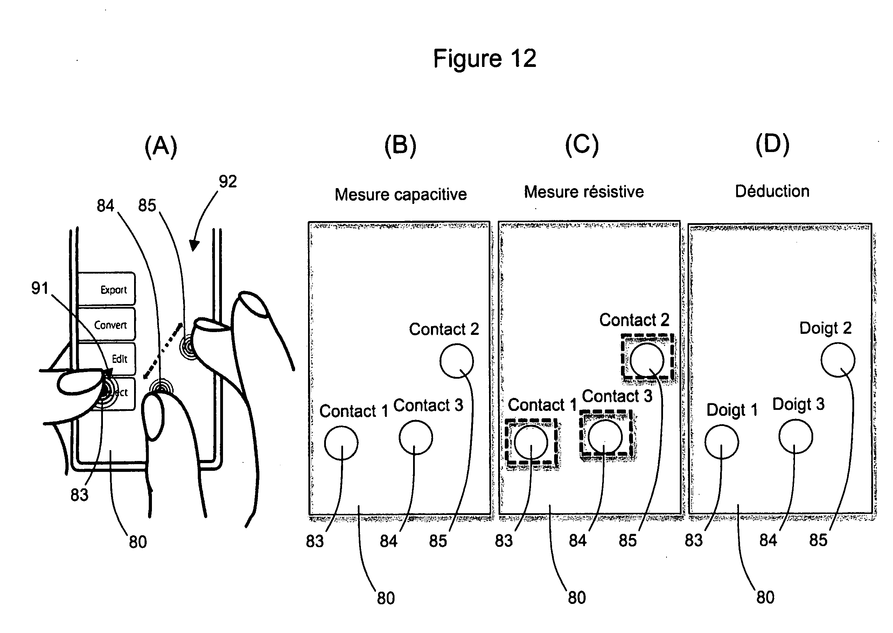

En référence aux figures 12A et 12B, trois contacts 83 (objet graphique 91), 84 et 85 (objet graphique 92) avec un doigt sont détectés sur l'écran tactile 80 lors d'une mesure capacitive. Comme le montrent la figure 12C et le chronogramme de la figure Il, il est alors procédé à une mesure résistive sur l'objet graphique 91 ou 92 associé à chaque zone de contact. Cette mesure permet la détection d'un contact dans les zones des trois contacts 83, 84 et 85. Comme illustré sur la figure 12D, on peut ainsi valider le fait que les trois contacts sont des contacts intentionnels et non pas accidentels. Par ailleurs, si un autre contact avait été détecté sur l'écran tactile 80 lors de la mesure capacitive, correspondant par exemple à un effleurement, celui-ci n'aurait pas été détecté lors de la mesure résistive et n'aurait donc pas été validé.

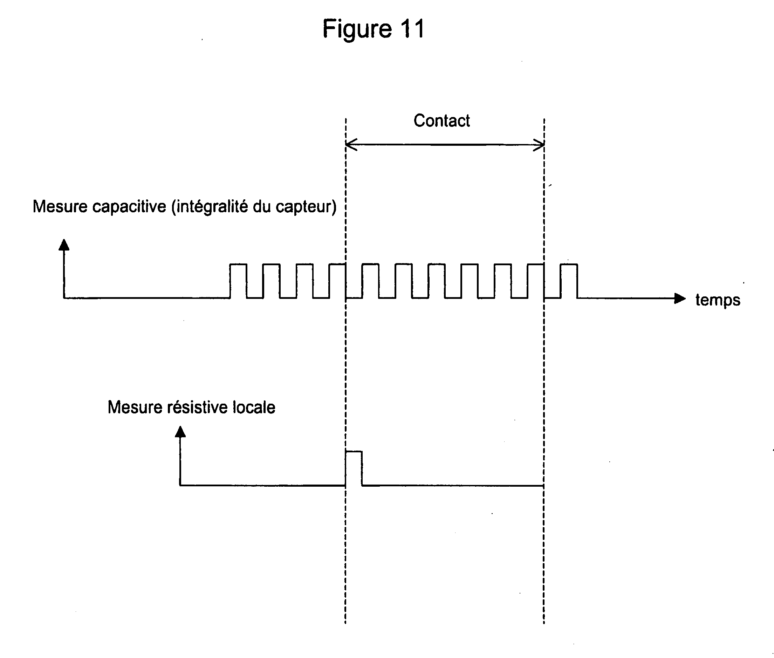

Cette mesure résistive s'effectue une seule fois sur ce curseur créé (figure 11), la nature du contact constitué par ce curseur ne pouvant a priori pas changer tant qu'il est maintenu, et il est procédé en parallèle à des phases de balayage en mode capacitif.

Ce mode de réalisation du circuit électronique d'analyse permet d'éviter qu'un contact involontaire - par exemple un effleurement - ne soit pris en compte pour un objet graphique dont l'activation ou non par contact présente une importance fondamentale.

Un afficheur tactile multipoints intégrant un circuit électronique d'analyse conforme au mode de réalisation précédemment décrit présente l'avantage de combiner les avantages d'une mesure capacitive - meilleure sensibilité du "toucher" - et d'une mesure résistive - adaptation à tout type d'outil de contact - sans être contraint par les inconvénients respectifs.

Un tel afficheur tactile multipoints est donc capable de fournir en toutes circonstances une information optimale et complète.

## Revendications

1. Circuit électronique d'analyse pour capteur tactile multicontacts (1) à matrice passive comportant des moyens d'alimentation électriques de l'un des deux axes de la matrice, et des moyens de détection des caractéristiques électriques selon l'autre axe de la matrice, aux intersections entre les deux axes, **caractérisé en ce que** la caractéristique électrique mesurée est la capacité à chaque phase de balayage du capteur, et **en ce que** lorsqu'un contact est détecté sur une zone de contact (83,84,85) à l'intérieur d'un objet graphique (91,92), la caractéristique électrique mesurée est en outre la résistance, ladite mesure additionnelle de résistance étant opérée sur ledit objet graphique dans son ensemble afin de déterminer la force exercée par ledit contact sur ledit objet graphique.

2. Circuit électronique d'analyse selon la revendication 1, **caractérisé en ce qu'**un curseur est créé si ladite force déterminée par la mesure additionnelle de résistance est supérieure à une valeur seuil.

3. circuit électronique d'analyse selon la revendication 2, **caractérisé en ce que** ledit contact détecté par la mesure de capacité n'est pas validé si ladite force déterminée par la mesure additionnelle de résistance est inférieure à ladite valeur seuil.

4. Capteur tactile à matrice passive multicontacts (1) comportant des moyens d'alimentation électriques de l'un des deux axes de la matrice, et des moyens de détection de caractéristiques électriques selon l'autre axe de la matrice, aux intersections entre les deux axes, ledit capteur tactile (1) comportant également un circuit électronique d'analyse conforme à l'une quelconque des revendications précédentes.

## Claims

1. Analysis electronic circuit for passive-matrix multicontact tactile sensors (1) including means for electrically energising one of the two axes of the matrix and means for detecting electrical characteristics on the other axis of the matrix at the intersections between the two axes, **characterised in that** the electrical characteristic measured in each phase of scanning of the sensor is capacitance, and **in that** if contact is detected in a contact area (83, 84, 85) inside a graphic object (91, 92), the electrical characteristic measured is also resistance, said additional resistance measurement being effected over the whole of said graphic object in order to determine the force exerted on said graphic object by said contact.

2. Analysis electronic circuit according to Claim 1, **characterised in that** a cursor is created if said force determined by the additional measurement of resistance is greater than a threshold value.

3. Analysis electronic circuit according to Claim 2, **characterised in that** said contact detected by the measurement of capacitance is not validated if said force determined by the additional measurement of resistance is below said threshold value.

4. Multicontact passive-matrix tactile sensor (1) including means for electrically energising one of the two axes of the matrix and means for detecting electrical characteristics on the other axis of the matrix at the intersections between the two axes, said tactile sensor (1) also including an analysis electronic circuit according to any of the preceding claims.

## Patentansprüche

1. Elektronische Analyseschaltung für einen taktilen Mehrkontakt-Passivmatrixsensor (1), der elektrische Versorgungsmittel von einer der zwei Achsen der Matrix und Detektionsmittel für elektrische Eigenschaften an den Schnittpunkten zwischen den zwei Achsen gemäß der anderen Achse der Matrix umfasst, **dadurch gekennzeichnet, dass** die gemessene elektrische Eigenschaft die Kapazität bei jeder Abtastphase des Sensors ist, und dass, wenn ein Kontakt auf einer Kontaktzone (83, 84, 85) im Inneren eines graphischen Objekts (91, 92) detektiert wird, die gemessene elektrische Eigenschaft zudem der Widerstand ist, wobei die zusätzliche Widerstandsmessung auf dem graphischen Objekt in seiner Gesamtheit durchgeführt wird, um die Kraft zu ermitteln, die durch den Kontakt auf das graphische Objekt ausgeübt wird.

2. Elektronische Analyseschaltung nach Anspruch 1,
**dadurch gekennzeichnet, dass** ein Cursor erzeugt wird, wenn die durch die zusätzliche Widerstandsmessung ermittelte Kraft größer als ein Schwellenwert ist.

3. Elektronische Analyseschaltung nach Anspruch 2,
**dadurch gekennzeichnet, dass** der durch die Kapazitätsmessung detektierte Kontakt nicht gültig ist, wenn die durch die zusätzliche Widerstandmessung ermittelte Kraft kleiner als der Schwellenwert ist.

4. Taktiler Mehrkontakt-Passivmatrixsensor (1),
der elektrische Versorgungsmittel von einer der zwei Achsen der Matrix und Detektionsmittel für elektrische Eigenschaften an Schnittpunkten zwischen den zwei Achsen gemäß der anderen Achse der Matrix umfasst, wobei der taktile Sensor (1) auch eine elektronische Analyseschaltung nach einem der vorhergehenden Ansprüche umfasst.
